# EUROPEAN PATENT APPLICATION

(11) **EP 3 012 569 A1**
(43) Date of publication of application: **27.04.2016**
(21) Application number: 14813311.9
(22) Date of filing: 06.06.2014
(51) Int. Cl.: F28D 20/00, F01N 3/20, F01N 3/24

(54) **CHEMICAL HEAT STORAGE DEVICE**

(30) Priority: 19.06.2013 JP 2013128549
(71) Applicant: Kabushiki Kaisha Toyota Jidoshokki, Kariya-shi, Aichi-ken 448-8671 (JP)
(72) Inventor: SUZUKI Hideaki, Kariya-shi Aichi 448-8671 (JP); MORI Kenji, Kariya-shi Aichi 448-8671 (JP)
(74) Representative: TBK
(86) International application number: PCT/JP2014/065143
(87) International publication number: WO 2014/203754

(57) **Abstract**

A chemical heat storage device that heats a heating target provided in an exhaust pipe 3 from an outer periphery of the heating target, comprising a reactor 9A that contains reaction materials 9a that generate heat by chemical reaction with a reaction medium, an adsorber that adsorbs the reaction medium with an adsorbent to store the reaction medium, and branch pipes 11a and 11b that connect the adsorber and the reactor 9A. The reactor 9A is provided around an outer peripheral surface of a portion at which the heating target is provided in the piping, and includes a plurality of inlet-outlets 9c and 9d through which the reaction medium is fed. The plurality of inlet-outlets 9c and 9d are arranged so as to be at equal intervals in a circumferential direction of the reactor 9A without being positioned in a lower portion of the reactor 9A.

## Description

### Technical Field

The present invention relates to a chemical heat storage device that heats a heating target provided in piping from an outer periphery of the heating target.

### Background Art

An exhaust system of a vehicle and the like includes a catalyst and so on that removes environmental pollutants (such as HC, CO, and NO_{X}) contained in exhaust gas discharged from an engine. The catalyst has an optimum temperature (activation temperature) for activating its cleaning ability. At the time of starting an engine, low temperature of exhaust gas requires the catalyst to take time to reach its activation temperature. Thus, a heating device is sometimes provided to warm up a catalyst when temperature of exhaust gas is low, such as starting of an engine, to raise temperature of the catalyst to its activation temperature in a short time. The heating device includes a chemical heat storage device that uses heat of chemical reaction to reduce energy loss (gas mileage loss) and warm up. Patent Literature 1 discloses a catalyst heating device that includes a catalyst body that is provided in a gas passage through which exhaust gas flows, and a first container that is provided upstream of the catalyst body to contain an adsorbent that generates/adsorbs heat by using adsorption/desorption of water that is a medium to be adsorbed, a second container that contains the medium to be adsorbed and the first container communicating with each other by a communicating pipe provided with an on-off valve.

### Citation List

### Patent Literature

Patent Literature 1: Japanese Patent Application Laid-Open No. 11-311117

### Summary of Invention

### Technical Problem

Some chemical heat storage devices include a reactor (reaction materials) that is provided all around an outer periphery of a heating target to improve temperature rise capability of the heating target such as a catalyst and mountability of the reactor so that the heating target is heated from its outer periphery. If there is only one inlet of a reaction medium in the reactor provided all around the outer periphery in such a manner, the reaction medium has to be supplied through the one inlet. Since the reaction materials are arranged in a surrounding shape, there is a difference in a distance between the inlet and the reaction material depending on a position at which the reaction material is arranged. Accordingly, the reaction medium is fed later as the reaction material is away from the inlet, so that it is difficult to feed the reaction medium to all of the reaction materials arranged around the outer periphery of the heating target. For that, since there is unevenness in chemical reaction between the reaction medium and the reaction material depending on a position at which the reaction material is arranged, there is a possibility that uneven heating with respect to the heating target (by extension, uneven temperature rise) may occur. As a result, it is impossible to rapidly raise temperature of the entire heating target (particularly, on a side with distance from the inlet).

Then, it is an object of the present invention to provide a chemical heat storage device that easily feeds a reaction medium to all of reaction materials.

### Solution to Problem

A chemical heat storage device according to the present invention heats a heating target provided in piping, and includes a reactor that contains reaction materials that generate heat by chemical reaction with a reaction medium, an adsorber that adsorbs the reaction medium with an adsorbent to store the reaction medium, and a connection pipe that connects the adsorber and the reactor, and in the chemical heat storage device, the reactor is provided around an outer peripheral surface of a portion at which the heating target is provided in the piping, and the reactor is provided with a plurality of inlets through which the reaction medium is fed.

The chemical heat storage device heats a heating target from its outer periphery. The chemical heat storage device includes the adsorber and the reactor, and the adsorber and the reactor are connected by the connection pipe. In the adsorber, a reaction medium is adsorbed with an adsorbent to be stored. In the reactor, when the reaction medium is fed from the adsorber through the connection pipe, reaction materials and the reaction medium chemically react with each other to generate heat. The reactor is provided around an outer periphery of the heating target. In particular, the reactor includes the plurality of inlets for feeding the reaction medium. The inlet may also serve as an outlet for discharging the reaction medium. Although the reactor (reaction materials) is arranged around the outer periphery of the heating target in a surrounding shape, the plurality of inlets of the reaction medium are provided, whereby it is possible to reduce a difference in a distance between the inlet and a reaction material depending on a position at which the reaction material is arranged as well as to reduce the amount of reaction materials to which the reaction medium is supplied per one inlet, as compared with a case where only one inlet is provided. Thus, a difference in a feeding speed of the reaction medium depending on a position at which the reaction material is arranged is reduced to allow the reaction medium to be easily fed to all of the reaction materials. As a result, it is possible to reduce unevenness in chemical reaction between the reaction medium and the reaction material depending on a position at which the reaction material is arranged, thereby enabling the chemical reaction to be promoted in all of the reaction materials arranged around the outer periphery of the heating target. In this way, the chemical heat storage device is capable of reducing uneven heating with respect to the heating target (by extension, uneven temperature rise) by providing the plurality of inlets of the reaction medium in the reactor to allow the reaction medium to be easily fed to all of the reaction materials. As a result, heating efficiency of the chemical heat storage device to the heating target is improved to enable the entire heating target to be rapidly increased in temperature.

In the chemical heat storage device of the present invention described above, it is preferable that the reactor surrounds the entire outer peripheral surface of the portion at which the heating target is provided in the piping in a circumferential direction, and that the plurality of inlets are arranged so as to be at equal intervals in the circumferential direction of the reactor. In this way, the plurality of inlets are arranged at equal intervals in the circumferential direction to enable a difference in a distance between the inlet and the reaction material depending on a position in the circumferential direction at which the reaction material is arranged to be minimized. As a result, it is possible to easily feed the reaction medium to all of the reaction materials more rapidly.

In addition, in the chemical heat storage device of the present invention described above, it is preferable that the plurality of inlets are arranged at a portion other than a lower portion of the reactor in a direction of gravitational force to prevent blockage of each of the inlets by the reaction material. If the inlet is arranged in the lower portion (in the direction of gravitational force) of the reactor, there is a possibility that the inlet may be blocked by a substance (such as a reaction material) inside the reactor. Thus, if the plurality of inlets are arranged at a portion other than the lower portion of the reactor, blockage of the inlet can be prevented.

Further, in the chemical heat storage device of the present invention described above, it is preferable that the reactor includes divided area where the reaction medium is movable corresponding to the respective plurality of inlets, and that the inlet is provided in the respective divided areas. In this way, since the reactor is divided into the plurality of areas corresponding to the respective plurality of inlets, the reaction medium can be supplied to the reaction materials in each of the divided areas. Then, since the inlet is provided for each of the areas divided, the reaction medium can be fed to each of the areas from one of the inlets, thereby enabling the amount of reaction materials to which the reaction medium is to be suppled per one inlet to be reduced (the reaction medium may be supplied to only the reaction materials in the area). Thus, a difference in a feeding speed of the reaction medium depending on a position at which the reaction material is arranged is reduced to allow the reaction medium to be rapidly fed to the reaction materials in the area, thereby allowing the reaction medium to be easily fed to all of the reaction materials more rapidly.

Furthermore, in the chemical heat storage device of the present invention described above, it is preferable that the reactor includes an outlet for discharging the reaction medium, and that the outlet is arranged in a portion other than the lower portion of the reactor in the direction of gravitational force to prevent blockage of the outlet by the reaction material. In this way, since the reactor includes the outlet in addition to the inlet, the reaction medium flows from the inlet to the outlet in one direction to reduce convection and turbulence, whereby the reaction medium smoothly flows. In addition, if the outlet is arranged in a portion other than the lower portion of the reactor, blockage of the outlet by a substance inside the reactor can be prevented.

### Advantageous Effects of Invention

According to the present invention, a plurality of inlets of a reaction medium are provided in a reactor to enable the reaction medium to be easily fed to all of reaction materials, whereby uneven heating with respect to a heating target can be reduced.

### Brief Description of Drawings

[Figure 1] Figure 1 is a schematic structural view of an exhaust gas cleaning system including a chemical heat storage device in the present embodiment.
[Figure 2] Figure 2 is a structural view of the chemical heat storage device in the present embodiment.
[Figure 3] Figure 3 is a cross-sectional view of a periphery of a reactor of a chemical heat storage device in a first embodiment.
[Figure 4] Figure 4 is a cross-sectional view of a periphery of a reactor of a chemical heat storage device in a second embodiment.
[Figure 5] Figure 5 is a cross-sectional view of a periphery of a reactor of a chemical heat storage device in a third embodiment.
[Figure 6] Figure 6 is a cross-sectional view of a periphery of a reactor of a chemical heat storage device in a fourth embodiment.

### Description of Embodiments

Hereinafter, the embodiments of the chemical heat storage device according to the present invention will be described with reference to the accompanying drawings. In the drawings, the same or similar element is designated by the same reference numeral without duplicated description on the element.

In the present embodiment, the chemical heat storage device according to the present invention is applied to a chemical heat storage device provided in an exhaust gas cleaning system in an exhaust system of an engine of a vehicle. The exhaust gas cleaning system in the present embodiment removes deleterious materials (environmental pollutant) contained in exhaust gas discharged from an engine (particularly, a diesel engine). In addition, the exhaust gas cleaning system in the present embodiment includes catalysts, such as a diesel oxidation catalyst (DOC), a selective catalytic reduction (SCR), and an ammonia slip catalyst (ASC), and a filter, such as a diesel particulate filter (DPF). Further, the exhaust gas cleaning system in the present embodiment also includes a chemical heat storage device for warming up the DOC. The present embodiment includes four embodiments each of which has a different structure of a reactor and the like of the chemical heat storage device.

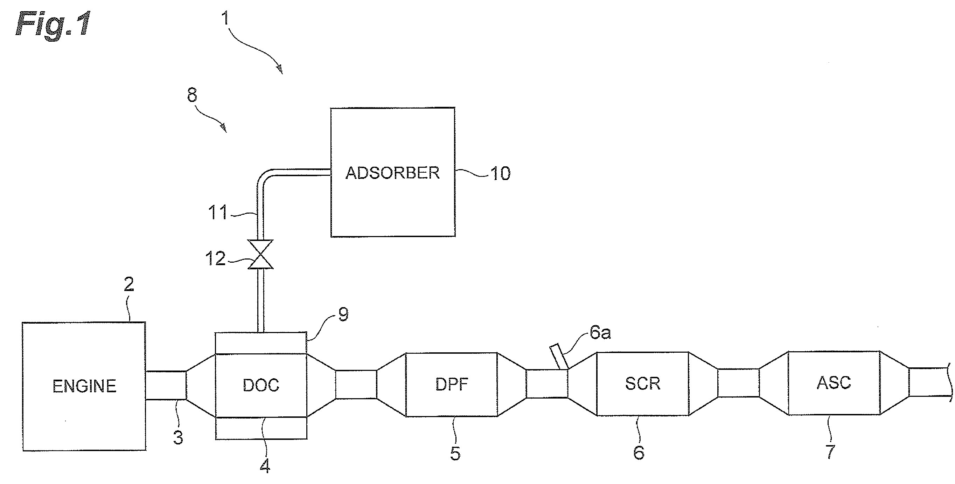

With reference to Figure 1, entire structure of an exhaust gas cleaning system 1 common to the first to fourth embodiments will be described. Figure 1 is a schematic structural view of an exhaust gas cleaning system in the present embodiment.

The exhaust gas cleaning system 1, from an upstream side toward a downstream side of an exhaust pipe 3 connected to an exhaust side of an engine 2, includes a diesel oxidation catalyst (DOC) 4, a diesel exhaust particulate filter (DPF) 5, selective catalytic reduction (SCR) 6, and an ammonia slip catalyst (ASC) 7. In the present embodiment, the exhaust pipe 3 corresponds to piping described in claims.

The DOC 4 is a catalyst that oxidizes HC, CO, and the like contained in exhaust gas. The DPF 5 is a filter that collects and removes PM contained in exhaust gas. The SCR 6 is a catalyst that reduces NO_{X} by allowing ammonia and NO_{X} contained in exhaust gas to chemically react with each other when ammonia (NH₃) or urea-water (that yields ammonia on hydrolysis) is supplied to the upstream side in the exhaust pipe by an injector 6a so that the exhaust gas is cleaned. The ASC 7 is a catalyst that oxidizes ammonia that has flowed to the downstream side through the SCR 6.

In each of the catalysts 4, 6, and 7, there is a temperature range (or activation temperature) in which cleaning ability with respect to environmental pollutants can be achieved. For example, a lower limit of the activation temperature of the DOC 4 is about 150°C. However, at the time immediately after the engine 2 is started, or the like, temperature of exhaust gas immediately after discharged from the engine 2 is relatively low, such as about 100°C. Thus, even at the time immediately after the engine 2 is started, or the like, it is required to rapidly increase temperature in each of the catalysts 4, 6, and 7 to its activation temperature to achieve cleaning ability in each of the catalysts 4, 6, and 7. For that, the exhaust gas cleaning system 1 also includes a chemical heat storage device 8 for warming up the catalysts. In addition, the exhaust gas cleaning system 1 includes a temperature sensor that detects temperature of exhaust gas discharged from the engine 2 (or temperature of the catalysts).

The chemical heat storage device 8 is a chemical heat storage device that warms up a catalyst without external energy. That is, the chemical heat storage device 8 usually stores heat of exhaust gas (exhaust heat) to warm up the catalyst by using the heat if necessary. In particular, the chemical heat storage device 8 warms up (heats) the DOC 4 that is a catalyst positioned upstream of the exhaust pipe 3 from an outer periphery of the DOC 4. Warming up upstream allows exhaust gas increased in temperature by the warming up to flow downstream from the catalysts (the SCR 6 and the ASC 7). The chemical heat storage device 8 includes a reactor 9, an adsorber 10, a connection pipe 11, an on-off valve 12, and the like. In the present embodiment, the DOC 4 corresponds to a heating target described in claims.

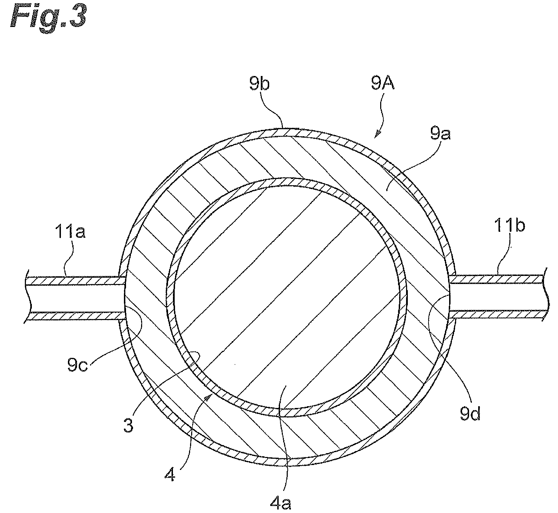

The reactor 9 is provided around the entire outer peripheral surface of a portion at which the DOC 4 is provided in the exhaust pipe 3, and is formed in a doughnut (annular) shape surrounding the DOC 4 in cross section. The above cross section in a doughnut shape is a cross section of a flow channel taking along a direction perpendicular to a direction in which exhaust gas flows in the reactor 9. As shown in Figure 3, the reactor 9 includes reaction materials (heat storage material) 9a that chemically react with ammonia (reaction medium), and the reaction materials 9a are housed in a casing 9b. In the reactor 9, the ammonia and the reaction materials 9a chemically react with each other to form chemical adsorption (coordinate bond) to generate heat. In addition, if temperature of the reactor 9 increases to a prescribed temperature or more in a state where the reaction materials 9a and the ammonia bind with each other, the reaction materials 9a and the ammonia are separated to start emitting the ammonia, and if the temperature increases to another higher prescribed temperature, most of the ammonia is emitted. Each of the prescribed temperatures changes depending on a combination of the reaction material 9a and the ammonia.

The reaction material 9a is formed into a solid like a tablet. A plurality of the tablet-like reaction materials 9a are aligned on an outer peripheral surface (a part of the exhaust pipe 3) of the DOC 4 in a direction in which exhaust gas flows, as well as aligned on the outer peripheral surface of the DOC 4 along a circumferential direction. Thus, a longitudinal-sectional shape of the tablet-like reaction material 9a is a rectangle, and a cross-sectional shape thereof is a divided doughnut shape (an arc shape with a predetermined thickness). The plurality of reaction materials 9a arranged in the direction in which exhaust gas flows and along the circumferential direction are provided around the entire outer peripheral surface of the DOC 4, and is formed in a doughnut shape surrounding the DOC 4 in cross section. Length of a row in which the plurality of reaction materials 9a are arranged in the direction in which exhaust gas flows allows the entire DOC 4 to be covered. Thus, the reaction materials 9a directly provided on the outer peripheral surface of the DOC 4 can directly warm up the entire DOC 4 through the thin exhaust pipe 3. For the reaction materials 9a, a material capable of chemically reacting with ammonia to generate heat to rise in temperature to activation temperature of a catalyst or more is available, and the material includes, for example, a divalent chloride (MCl₂), a divalent bromide (MBr₂), and a divalent iodide (MI₂), where Mg, Ni, Co, Fe, Mn, Ca, Sr, Ba, Cu, Cr, or the like, is suitable to M.

The casing 9b is provided so as to surround a whole area of an outer periphery side of the reactor 9 and a whole area of upstream and downstream ends of the reactor 9, and an airtight space is formed between the casing 9b and the outer peripheral surface of the DOC 4 to be filled with the reaction materials 9a. In this way, since the reaction materials 9a are contained in the airtight space, it is possible to repeatedly perform chemical reaction with ammonia. The reactor 9 includes a plurality of inlet-outlets, or a plurality of inlets and outlets, which open with respect to the reaction materials 9a, to allow ammonia to be fed and discharged therethrough. Structure of the inlet-outlet, or the inlet and the outlet of the reactor 9, will be described in detail in each of embodiments described below. In addition, a heat insulator or the like may be provided between the reaction materials 9a and the casing 9b.

The adsorber 10 contains activated carbon serving as an adsorbent that physically adsorbs ammonia. In the adsorber 10, the ammonia is stored while physically adsorbed by the activated carbon to store exhaust heat (warmed ammonia) of exhaust gas, and then the ammonia is separated from the activated carbon to be emitted, and is supplied to the reactor 9.

The connection pipe 11 connects the reactor 9 and the adsorber 10 to allow ammonia to move between the reactor 9 and the adsorber 10 therethrough. The connection pipe 11 is connected at one end to an inlet-outlet, or an inlet and an outlet, while penetrating the casing 9b of the reactor 9. The on-off valve 12 is provided in the middle of the connection pipe 11. Opening the on-off valve 12 enables the ammonia to move between the reactor 9 and adsorber 10 through the connection pipe 11. Structure of the connection pipe 11 and the on-off valve 12 is changed depending on the structure of the inlet-outlet, or the inlet and the outlet, of the reactor 9, and thus will be described in detail in each of the embodiments described below. Opening and closing of the on-off valve 12 is controlled by a control unit, such as an electronic control unit (ECU, not shown) that controls the engine 2.

The DOC 4 is a heating target of the chemical heat storage device 8, and has structure in which a catalyst is supported by a honeycomb substrate 4a in a cylindrical shape provided in the thin exhaust pipe 3 in an annular shape in cross section, as shown in Figure 3, and the like. Thus, a part of the exhaust pipe 3 constitutes the outer peripheral surface of the DOC 4. Material of the honeycomb substrate 4a is ceramic, for example. In addition, material of the exhaust pipe 3 is stainless steel (SUS), for example.

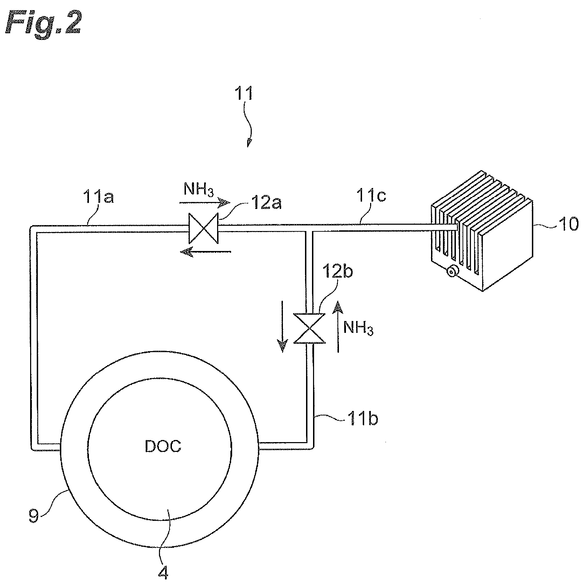

First, with reference to Figures 2 and 3, structure of an inlet-outlet of the reactor 9A in a first embodiment, and structure of the connection pipe 11 and the on-off valve 12 corresponding to the inlet-outlet, will be described. Figure 2 is a structural view of the chemical heat storage device in the present embodiment. Figure 3 is a cross-sectional view of a periphery of a reactor of a chemical heat storage device in the first embodiment.

The reactor 9A includes two inlet-outlets 9c and 9d. The inlet-outlets 9c and 9d serve as an inlet of ammonia into the reactor 9A as well as an outlet of the ammonia from the reactor 9A. The two inlet-outlets 9c and 9d are arranged at opposite positions in a horizontal direction in the reactor 9A so as to be arranged at an equal interval (180° apart) in a circumferential direction of the reactor 9A. It is desirable that the two inlet-outlets 9c and 9d are arranged at a center position in the direction in which exhaust gas flows in the reactor 9A. In the first embodiment, the inlet-outlets 9c and 9d correspond to the plurality of inlets described in claims.

The connection pipe 11 is composed of two branch pipes 11 a and 11b corresponding to the two inlet-outlets 9c and 9d, respectively, and one junction pipe 11c. The branch pipe 11 a is for the inlet-outlet 9c, and is connected at one end to the inlet-outlet 9c, as well as at the other end to the junction pipe 11c. The branch pipe 11b is for the inlet-outlet 9d, and is connected at one end to the inlet-outlet 9d, as well as at the other end to the junction pipe 11c. The junction pipe 11c is connected at one end to the branch pipe 11a and the branch pipe 11b as well as at the other end to the adsorber 10. The branch pipe 11 a is provided with an on-off valve 12a. The branch pipe 11b is provided with an on-off valve 12b. It is also possible to provide one on-off valve 12 only in the junction pipe 11c.

Operation of the chemical heat storage device 8 configured as above will be described. When a vehicle is stopped (when the engine 2 is stopped), the on-off valves 12a and 12b are closed. Thus, even if ammonia is separated from activated carbon in the adsorber 10, no ammonia is supplied to the reactor 9A through the connection pipe 11.

In a case where temperature of exhaust gas discharged from the engine 2 after the engine 2 is started is lower than prescribed temperature (temperature that is set on the basis of activation temperature of a catalyst), such as a case immediately after the engine 2 is started, the on-off valves 12a and 12b are opened by control of the ECU to allow ammonia to be supplied to the reactor 9A from the adsorber 10 through the connection pipe 11 (from the junction pipe 11c to the branch pipes 11a and 11b). At this time, pressure in the adsorber 10 is higher than pressure in the reactor 9A, and thus ammonia moves toward the reactor 9A. Particularly, the ammonia to be supplied is fed from the inlet-outlet 9c on one side in the horizontal direction in the reactor 9A through the branch pipe 11a with the on-off valve 12a opened, as well as from the inlet-outlet 9d on the other side in the horizontal direction in the reactor 9A through the branch pipe 11b with the on-off valve 12b opened. Thus, the ammonia is fed into the reaction materials 9a arranged all around the outer periphery of the DOC 4 from the opposite sides in the horizontal direction. Accordingly, since the reaction material 9a is positioned 90° away from the inlet-outlets 9c and 9d in the circumferential direction at a maximum, a difference in feeding speed of the ammonia depending on a position at which the reaction material 9a is arranged is small, or a delay in reaching of the ammonia to the reaction material 9a away from the inlet-outlets 9c and 9d is short, thereby allowing the ammonia to be rapidly fed to all of the reaction materials 9a. In the reactor 9A, the ammonia supplied and the reaction materials 9a chemically react with each other to form chemical adsorption to generate heat. Then, unevenness in the chemical reaction depending on a position at which the reaction material 9a is arranged is small, and thus unevenness of heat generation all around the outer periphery of the DOC 4 is small. The heat is transmitted to the outer periphery of the DOC 4 (a part of the exhaust pipe 3). Accordingly, the DOC 4 is heated, and if temperature of the DOC 4 increases to its activation temperature or more, exhaust gas can be cleaned up in the DOC 4.

If temperature of exhaust gas discharged from the engine 2 becomes higher than the prescribed temperature, exhaust heat of the exhaust gas allows ammonia and the reaction materials 9a to separate from each other in the reactor 9A so that the ammonia occurs. Since the on-off valves 12a and 12b are opened, the ammonia separated is discharged from the inlet-outlets 9c and 9d of the reactor 9A, and then returns to the adsorber 10 through the connection pipe 11 (from the branch pipes 11a and 11b to the junction pipe 11c). At this time, pressure in the reactor 9A is higher than pressure in the adsorber 10, and thus the ammonia moves toward the adsorber 10. In the adsorber 10, an adsorbent physically adsorbs the ammonia so that the ammonia is stored. If a pressure value in the adsorber 10 becomes a pressure value showing that ammonia is fully stored, the ECU closes the on-off valves 12a and 12b.

According to the structure in the first embodiment, since the two inlet-outlets 9c and 9d are provided on the opposite sides in the horizontal direction in the reactor 9A, a difference in feeding speed of the ammonia depending on a position at which the reaction material 9a is arranged is small, whereby the ammonia is rapidly fed to all of the reaction materials 9a provided all around the outer periphery of the DOC 4. As a result, it is possible to reduce unevenness in the chemical reaction between the ammonia and the reaction materials 9a depending on a position at which the reaction material 9a is arranged, thereby enabling the chemical reaction to be promoted in all of the reaction materials 9a. In addition, it is possible to reduce uneven heating with respect to the heating target (by extension, uneven temperature rise), and thus heating efficiency of the chemical heat storage device 8 to the DOC 4 is improved to enable the entire DOC 4 to rapidly increase in temperature.

In addition, according to the structure in the first embodiment, since the two inlet-outlets 9c and 9d are arranged on the opposite sides in the horizontal direction, it is possible to minimize a difference in a distance between the inlet-outlets 9c and 9d, and the reaction material 9a depending on a position at which the reaction material 9a is arranged in the circumferential direction (a difference in a distance corresponding to an angle of 90° is maximum). Further, according to the structure in the first embodiment, since the two inlet-outlets 9c and 9d are arranged in the horizontal direction, or are not arranged in a lower portion of the reactor 9A (in a direction of gravitational force), the inlet-outlets 9c and 9d are not blocked even if a substance inside the reactor 9A (such as a reaction material) drops downward. The lower portion indicates a predetermined range including a lowermost point of the reactor in the direction of gravitational force in a state where the chemical heat storage device is used.

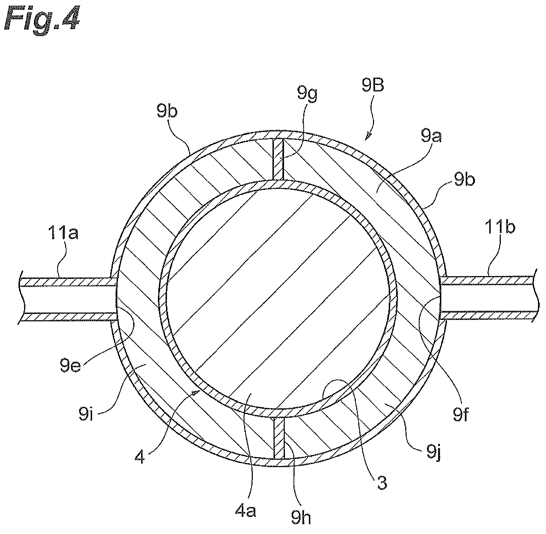

Next, with reference to Figure 4, structure of an inlet-outlet of the reactor 9B in a second embodiment, and structure of the connection pipe 11 and the on-off valve 12 corresponding to the inlet-outlet, will be described. Figure 4 is a cross-sectional view of a periphery of a reactor of a chemical heat storage device in the second embodiment. As compared with the structure in the first embodiment, structure in the second embodiment is different in that an area inside the reactor 9B where ammonia is movable is divided into two areas corresponding to two inlet-outlets.

The reactor 9B includes two inlet-outlets 9e and 9f similar to the two inlet-outlets 9c and 9d in the first embodiment. The connection pipe 11 also has structure similar to that of the connection pipe 11 in the first embodiment (the two branch pipes 11a and 11b, and the one junction pipe 11c). In the second embodiment, the inlet-outlets 9e and 9f correspond to the plurality of inlets described in claims.

In the reactor 9B, partition walls 9g and 9h are provided. The partition wall 9g is provided between the casing 9b and the exhaust pipe 3 (outer peripheral surface of the DOC 4) in an uppermost portion of the reactor 9B. The partition wall 9h is provided between the casing 9b and the exhaust pipe 3 in a lowermost portion of the reactor 9B. Length of the partition walls 9g and 9h corresponds to that of the entire reactor 9B in the direction in which exhaust gas flows. The partition walls 9g and 9h divide an inside of the reactor 9B into two areas 9i and 9j. Each of the areas 9i and 9j has a half-doughnut shape in cross section.

The partition walls 9g and 9h are formed of a material through which no ammonia can pass, such as stainless steel (SUS). Thus, in the two areas 9i and 9j, ammonia is movable in each of the areas, but no ammonia is movable to the other area. It is preferable that the partition walls 9g and 9h are provided between pellet-like reaction materials 9a.

The area 9i is provided with the inlet-outlet 9e at a position in the horizontal direction. In the area 9i, only ammonia fed from the inlet-outlet 9e is movable. The area 9j is provided with the inlet-outlet 9f at a position in the horizontal direction. In the area 9j, only ammonia fed from the inlet-outlet 9f is movable.

Operation of the chemical heat storage device 8 configured as above will be described. Since each operation when a vehicle is stopped (when the engine 2 is stopped) and after warming up is finished is the same as that described in the first embodiment, description thereof is omitted.

In a case where temperature of exhaust gas discharged from the engine 2 after the engine 2 is started is lower than prescribed temperature, as with the first embodiment, the on-off valves 12a and 12b are opened to allow ammonia to be supplied to the reactor 9B from the adsorber 10 through the connection pipe 11. Particularly, the ammonia to be supplied is fed from the inlet-outlet 9e on one side in the horizontal direction in the reactor 9B through the branch pipe 11 a with the on-off valve 12a opened, as well as from the inlet-outlet 9f on the other side in the horizontal direction in the reactor 9B through the branch pipe 11b with the on-off valve 12b opened. Thus, the ammonia is fed into the reaction materials 9a arranged all around the outer periphery of the DOC 4 from the opposite sides in the horizontal direction. A moving range of the ammonia fed from the inlet-outlet 9e is limited to the area 9i on one side. In addition, a moving range of the ammonia fed from the inlet-outlet 9f is limited to the area 9j on the other side. Accordingly, the reaction material 9a is positioned 90° away from the inlet-outlets 9e and 9f in the circumferential direction at a maximum, and a moving range of ammonia fed from each of the inlet-outlets 9e and 9f is small, so that a difference in feeding speed of the ammonia depending on a position at which the reaction material 9a is arranged is very small. As a result, the ammonia is rapidly fed to all of the reaction materials 9a (the reaction materials 9a in the area 9i and the reaction materials 9a in the area 9j). In the reactor 9B, the ammonia supplied and the reaction materials 9a chemically react with each other to form chemical adsorption to generate heat. Then, unevenness in the chemical reaction depending on a position at which the reaction material 9a is arranged in each of the areas 9i and 9j is small, and thus unevenness of heat generation all around the outer periphery of the DOC 4 is small. The heat is transmitted to the outer periphery of the DOC 4 (a part of the exhaust pipe 3). Accordingly, the DOC 4 is heated, and if temperature of the DOC 4 increases to its activation temperature or more, exhaust gas can be cleaned up in the DOC 4.

The structure in the second embodiment has the effect of the structure in the first embodiment as well as the effect below. According to the structure in the second embodiment, the inside of the reactor 9B is divided into the two areas 9i and 9j corresponding to the two inlet-outlets 9e and 9f, and thus a moving range of ammonia fed from each of the inlet-outlets 9e and 9f is small to enable the amount of the reaction materials 9a to which the ammonia is supplied from one of the inlet-outlets 9e and 9f to be relatively reduced (all of the reaction materials 9a is halved each). Accordingly, it is possible to further reduce a difference in feeding speed of the ammonia depending on a position at which the reaction material 9a is arranged in each of the areas 9i and 9j, whereby the ammonia is more rapidly fed to all of the reaction materials 9a provided all around the outer periphery of the DOC 4. As a result, it is possible to further reduce unevenness in the chemical reaction between the ammonia and the reaction materials 9a depending on a position at which the reaction material 9a is arranged, thereby enabling the chemical reaction to be further promoted in all of the reaction materials 9a.

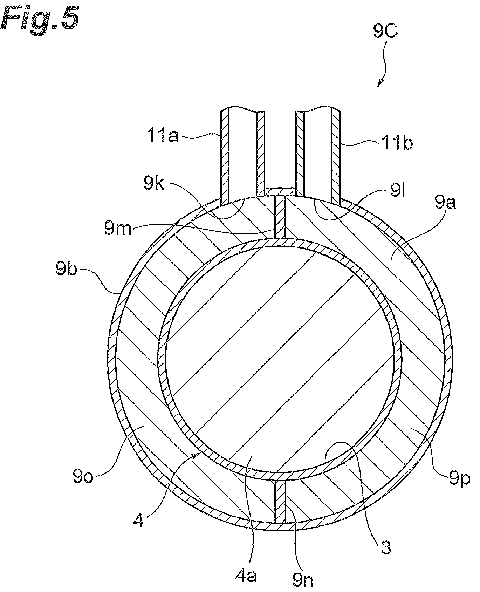

Next, with reference to Figure 5, structure of an inlet-outlet of the reactor 9C in a third embodiment, and structure of the connection pipe 11 and the on-off valve 12 corresponding to the inlet-outlet, will be described. Figure 5 is a cross-sectional view of a periphery of a reactor of a chemical heat storage device in the third embodiment. The structure in the third embodiment is different in arrangement of two inlet-outlets as compared with the structure in the second embodiment.

The reactor 9C includes two partition walls 9m and 9n similar to the two partition walls 9g and 9h in the second embodiment. Thus, the inside of the reactor 9C is divided into two areas 9o and 9p by the partition walls 9m and 9n, as with the two areas 9i and 9j in the second embodiment.

The reactor 9C includes two inlet-outlets 9k and 91. The two inlet-outlets 9k and 9l are arranged in an upper portion of the reactor 9C side by side in a circumferential direction. It is desirable that the two inlet-outlets 9k and 9l are arranged at a center position in the direction in which exhaust gas flows in the reactor 9C. The inlet-outlet 9k is provided at a position in the upper portion of the reactor 9C, the position opening to the area 9o. In the area 9o, only ammonia fed from the inlet-outlet 9k is movable. The inlet-outlet 91 is provided at a position in the upper portion of the reactor 9C, the position opening to the area 9p. In the area 9p, only ammonia fed from the inlet-outlet 91 is movable. In the third embodiment, the inlet-outlets 9k and 9l correspond to the plurality of inlets described in claims.

Operation of the chemical heat storage device 8 configured as above will be described. Since each operation when a vehicle is stopped (when the engine 2 is stopped) and after warming up is finished is the same as that described in the first embodiment, description thereof is omitted.

In a case where temperature of exhaust gas discharged from the engine 2 after the engine 2 is started is lower than prescribed temperature, as with the first embodiment, the on-off valves 12a and 12b are opened to allow ammonia to be supplied to the reactor 9C from the adsorber 10 through the connection pipe 11. Particularly, the ammonia to be supplied is fed from the inlet-outlet 9k on one side in the upper portion in the reactor 9C through the branch pipe 11 a with the on-off valve 12a opened, as well as from the inlet-outlet 91 on the other side in the upper portion in the reactor 9C through the branch pipe 11b with the on-off valve 12b opened. A moving range of the ammonia fed from the inlet-outlet 9k is limited to the area 9o on one side. In addition, a moving range of the ammonia fed from the inlet-outlet 91 is limited to the area 9p on the other side. Accordingly, since a moving range of ammonia fed from each of the inlet-outlets 9k and 9l is small, the amount of the reaction materials 9a to which the ammonia is supplied from one of the inlet-outlets 9k and 9l is small, whereby a difference in feeding speed of the ammonia depending on a position at which the reaction material 9a is arranged is small. As a result, the ammonia is rapidly fed to all of the reaction materials 9a (the reaction materials 9a in the area 9o and the reaction materials 9a in the area 9p). In the reactor 9C, the ammonia supplied and the reaction materials 9a chemically react with each other to form chemical adsorption to generate heat. Then, unevenness in the chemical reaction depending on a position at which the reaction material 9a is arranged in each of the areas 9o and 9p is small, and thus unevenness of heat generation all around the outer periphery of the DOC 4 is small. The heat is transmitted to the outer periphery of the DOC 4 (a part of the exhaust pipe 3). Accordingly, the DOC 4 is heated, and if temperature of the DOC 4 increases to its activation temperature or more, exhaust gas can be cleaned up in the DOC 4.

According to the structure in the third embodiment, the inside of the reactor 9C is divided into the two areas 9o and 9p, and the inlet-outlets 9k and 91, are provided in the areas 9o and 9p, respectively. Accordingly, as with the second embodiment, it is possible to relatively reduce the amount of the reaction materials 9a to which the ammonia is supplied from one of the inlet-outlets 9k and 91. Thus, it is possible to reduce a difference in feeding speed of the ammonia depending on a position at which the reaction material 9a is arranged in each of the areas 9o and 9p, whereby the ammonia is rapidly fed to all of the reaction materials 9a provided all around the outer periphery of the DOC 4. As a result, as with the first embodiment, it is possible to reduce unevenness in chemical reaction to reduce unevenness heating with respect to a heating target, whereby the entire DOC 4 can be rapidly increased in temperature. In addition, according to the structure in the third embodiment, since the two inlet-outlets 9k and 9l are arranged in the upper portion of the reactor 9C, the inlet-outlets 9k and 9l are not blocked by a substance inside the reactor 9C. Further, according to the structure in the third embodiment, since the two inlet-outlets 9k and 9l are arranged in the upper portion of the reactor 9C, the two branch pipes 11a and 11b can be reduced in length, and moreover a mounting space of the reactor 9C can be reduced, thereby achieving excellent mountability. Even if inlet-outlets cannot be provided at positions on opposite sides in a horizontal direction or the like in a reactor due to limitation on mounting in a vehicle, the structure in the third embodiment enables the reactor to be mounted.

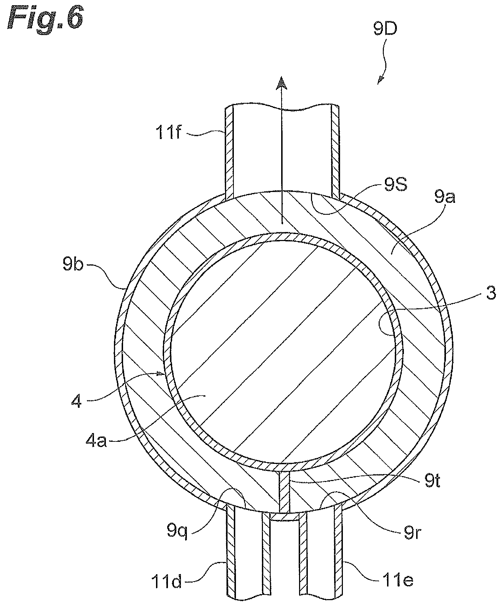

Next, with reference to Figure 6, structure of an inlet and an outlet of the reactor 9D in a fourth embodiment, and structure of the connection pipe 11 and the on-off valve 12 corresponding to the inlet and the outlet, will be described. Figure 6 is a cross-sectional view of a periphery of a reactor of a chemical heat storage device in the fourth embodiment. The structure in the fourth embodiment is different in that the inlet and the outlet are provided separately as compared with the structure in the first embodiment.

The reactor 9D includes two inlets 9q and 9r, and one outlet 9s. The two inlets 9q and 9r are arranged in a lower portion of the reactor 9D side by side in a circumferential direction. The one outlet 9s is arranged in an uppermost portion of the reactor 9D. In this way, the two inlets 9q and 9r, and the one outlet 9s are arranged on opposite sides in the direction of gravitational force. It is desirable that the inlets 9q and 9r, and the outlet 9s are arranged at a center position in the direction in which exhaust gas flows in the reactor 9D. In the fourth embodiment, the inlets 9q and 9r correspond to the plurality of inlets described in claims.

In the reactor 9D, a partition wall 9t is provided. The partition wall 9t is provided between the casing 9b and the exhaust pipe 3 in a lowermost portion of the reactor 9D. Length of the partition wall 9t corresponds to that of the entire reactor 9D in the direction in which exhaust gas flows. The partition wall 9t is positioned between the inlet 9q and the inlet 9r. The partition wall 9t can separate a flow channel through which ammonia fed from the inlet 9q flows to the outlet 9s, and a flow channel through which ammonia fed from the inlet 9r flows to the outlet 9s.

The connection pipe 11 is composed of two inlet pipes 11d and 11e corresponding to the two inlets 9q and 9r, respectively, and outlet pipe 11f corresponding to the one outlet 9s. The inlet pipe 11d is for the inlet 9q, and is connected at one end to the inlet 9q, as well as at the other end to the adsorber 10. The inlet pipe 11d is for the inlet 9r, and is connected at one end to the inlet 9r, as well as at the other end to the adsorber 10. The outlet pipe 11f is for the outlet 9s, and is connected at one end to the outlet 9s, as well as at the other end to the adsorber 10. Each of the two inlet pipes 11d and 11e, and the one outlet pipe 11f, is provided with the on-off valve 12.

Operation of the chemical heat storage device 8 configured as above will be described. When a vehicle is stopped (when the engine 2 is stopped), all of the three on-off valves 12 are closed. Thus, even if ammonia is separated from activated carbon in the adsorber 10, no ammonia is supplied to the reactor 9D through the inlet pipes 11d and 11e.

In a case where temperature of exhaust gas discharged from the engine 2 after the engine 2 is started is lower than prescribed temperature, the two on-off valves 12 provided in the respective two inlet pipes 11d and 11e are opened under control by the ECU to allow ammonia to be supplied to the reactor 9D from the adsorber 10 through the inlet pipes 11d and 11e. At this time, pressure in the adsorber 10 is higher than pressure in the reactor 9D, and thus the ammonia moves toward the reactor 9D. Particularly, the ammonia to be supplied is fed from the inlet 9q on one side in a lower portion in the reactor 9D through the inlet pipe 11d with the on-off valve 12 opened, as well as from the inlet 9r on the other side in the reactor 9D through the inlet pipe 11e with the on-off valve 12 opened. The ammonia fed from the inlet 9q moves toward the outlet 9s in the upper portion of the reactor 9D through a flow channel on one side of the inside of the reactor 9D divided by the partition wall 9t. Meanwhile, the ammonia fed from the inlet 9r moves toward the outlet 9s in the upper portion of the reactor 9D through a flow channel on the other side of the inside of the reactor 9D divided by the partition wall 9t. Accordingly, since a moving range of ammonia fed from each of the inlets 9q and 9r is small, the amount of the reaction materials 9a to which the ammonia is supplied from one of the inlets 9q and 9r is small, whereby a difference in feeding speed of the ammonia depending on a position at which the reaction material 9a is arranged is small. As a result, the ammonia is rapidly fed to all of the reaction materials 9a. In the reactor 9D, the ammonia supplied and the reaction materials 9a chemically react with each other to form chemical adsorption to generate heat. Then, unevenness in the chemical reaction depending on a position at which the reaction material 9a is arranged is small, and thus unevenness of heat generation all around the outer periphery of the DOC 4 is small. The heat is transmitted to the outer periphery of the DOC 4 (a part of the exhaust pipe 3). Accordingly, the DOC 4 is heated, and if temperature of the DOC 4 increases to its activation temperature or more, exhaust gas can be cleaned up in the DOC 4.

If temperature of exhaust gas discharged from the engine 2 becomes higher than the prescribed temperature, the on-off valve 12 provided in the outlet pipe 11f is opened under control by the ECU. Then, exhaust heat of the exhaust gas allows ammonia and the reaction materials 9a to separate from each other in the reactor 9D so that the ammonia occurs. Since the on-off valve 12 in the outlet pipe 11f is opened, the ammonia separated is discharged from the outlet 9s of the reactor 9D, and then returns to the adsorber 10 through the outlet pipe 11f. At this time, pressure in the reactor 9D is higher than pressure in the adsorber 10, and thus the ammonia moves toward the adsorber 10. In the adsorber 10, an adsorbent physically adsorbs the ammonia so that the ammonia is stored. If a pressure value in the adsorber 10 becomes a pressure value showing that ammonia is fully stored, the ECU closes the three on-off valves 12.

According to the structure in the fourth embodiment, since the two inlets 9q and 9r, and the one outlet 9s, are provided on opposite sides in the reactor 9D, and a flow channel of ammonia fed from the inlets 9q and 9r is divided by the partition wall 9t, a difference in feeding speed of the ammonia depending on a position at which the reaction material 9a is arranged is small, whereby the ammonia is rapidly fed to all of the reaction materials 9a provided all around the outer periphery of the DOC 4. As a result, as with the first embodiment, it is possible to reduce unevenness in chemical reaction to reduce unevenness heating with respect to a heating target, whereby the entire DOC 4 can be rapidly increased in temperature.

In addition, according to the structure in the fourth embodiment, since the inlets 9q and 9r, and the outlet 9s, are arranged on the opposite sides, ammonia flows in one direction to reduce convection and turbulence, whereby the ammonia smoothly flows. Further, according to the structure in the fourth embodiment, since the inlets 9q and 9r are arranged in the lower portion, and the outlet 9s is arranged in the upper portion, or the outlet 9s is arranged in a portion other than the lower portion, the ammonia is fed into the reactor 9D at high pressure from the inlets 9q and 9r in the lower portion. Thus, even if a substance inside the reactor 9D drops, the substance can be blown away by high pressure upward from the lower portion. As a result, there is no blockage of the inlets 9q and 9r. The lower portion indicates a predetermined range including a lowermost point of the reactor in the direction of gravitational force in a state where the chemical heat storage device is used. There is also no blockage of the outlet 9s because it is arranged in the upper portion. Even if an inlet-outlet cannot be provided in a horizontal direction in a reactor due to limitation on mounting in a vehicle, the structure in the fourth embodiment enables blockage of an inlet and an outlet to be prevented.

While the embodiments according to the present invention are described as above, the present invention is not limited to forms of the embodiments above, and can be practiced in various forms.

For example, while the present embodiments employ an exhaust gas cleaning system that includes a DOC, an SCR, and an ASC, as a catalyst, and a DPF as a filter, exhaust gas cleaning systems of various other structures are available. In addition, although a vehicle with a diesel engine is described, the present invention is also available for a vehicle with a gasoline engine, and the like. The present invention is also available for an exhaust gas cleaning system for other than a vehicle. In addition, the present invention is also available for other than an exhaust gas cleaning system.

In the present embodiments, a DOC of a catalyst is set as a heating target of the chemical heat storage device, but another catalyst, such as an SCR, may be set as the heating target, for example. While the present embodiments employ ammonia for a reaction medium in chemical reaction in the chemical heat storage device, another medium, such as carbon dioxide, alcohol, and water, may be available. Although the present embodiments employ structure in which a reactor is provided all around an outer periphery of a DOC, the reactor may not be provided all around the outer periphery.

While the present embodiments employ structure in which two inlets (inlet-outlets) are provided in a reactor, three or more inlets may be available. Even in a case where three or more inlets are provided, it is desirable that the inlets are arranged in a circumferential direction of a reactor depending on the number of inlets so that intervals of the inlets are equal (particularly, in a case where the inside of a reactor is not divided into a plurality of areas).

Although the present embodiments employ structure in which two inlet-outlets are arranged in a circumferential direction of a reactor at an equal interval (180° apart, or opposite sides, particularly, in a case where the inside of the reactor is not divided into two areas), a plurality of inlets may not be arranged in the circumferential direction at equal intervals. In particular, if inlets or inlet-outlets cannot be arranged at equal intervals due to limitation on mounting in a vehicle, the plurality of inlets or inlet-outlets may be arranged so that an arrangement interval widens as much as possible within a mountable range.

While the present embodiments show various forms of arrangement of a plurality of inlets or a plurality of inlet-outlets in a circumferential direction of a reactor, the plurality of inlets or the plurality of inlet-outlets may be arranged so that an interval therebetween in the reactor is widened in a direction in which exhaust gas flows. For example, two inlets or two inlet-outlets are arranged on an upstream side and a downstream side in the reactor. In addition, the inlets or inlet-outlets may be arranged so that an interval therebetween both in the circumferential direction and in the direction in which exhaust gas flows in the reactor is widened. For example, two inlets or two inlet-outlets are arranged on one side in a horizontal direction on an upstream side in a reactor, and on the other side in the horizontal direction on a downstream side in the reactor.

Although the first and second embodiments have structure in which inlet-outlets are provided at positions on opposite sides in a horizontal direction in a reactor, the inlet-outlets may be provided at positions on opposite sides in a direction other than the horizontal direction if the inlet-outlets are arranged at positions other than a lower portion where the inlet-outlets may be blocked by a substance inside the reactor.

The third embodiment has structure in which two inlet-outlets are provided in an uppermost portion of a reactor, but the inlet-outlets may be provided in other positions below the uppermost portion within a range in which the reactor is mountable on a vehicle. Arrangement of the inlet-outlets at the positions below the uppermost portion enables a distance between reaction materials arranged in a lower portion, and the inlet-outlets to be reduced.

While the fourth embodiment has structure in which a partition wall is provided in a reactor, structure without the partition wall may be available. In addition, the fourth embodiment has structure in which inlets are provided in a lowermost portion of a reactor, and an outlet is provided in an uppermost portion thereof, so that the inlets and the outlet are arranged on opposite sides in a direction of gravitational force, but the inlets and the outlet may be arranged on opposite sides in another direction, such as a horizontal direction.

### Reference Signs List

1 ... exhaust gas cleaning system, 2 ... engine, 3 ... exhaust pipe, 4 ... diesel oxidation catalyst (DOC), 4a ... honeycomb substrate, 5 ... diesel exhaust particulate filter (DPF), 6 ... selective catalytic reduction (SCR), 6a ... injector, 7 ... ammonia slip catalyst (ASC), 8 ... chemical heat storage device, 9, 9A, 9B, 9C, 9D ... reactor, 9a ... reaction material, 9b ... casing, 9c, 9d, 9e, 9f, 9k, 91 ... inlet-outlet, 9g, 9h, 9m, 9n, 9t ... partition wall, 9i, 9j, 9o, 9p ... area, 9q, 9r ... inlet, 9s ... outlet, 10 ... adsorber, 11 ... connection pipe, 11a, 11b ... branch pipe, 11c ... junction pipe, 11d, 11e ... inlet pipe, 11f ... outlet pipe, 12, 12a, 12b ... on-off valve.

## Claims

1. A chemical heat storage device that heats a heating target provided in a piping, the chemical heat storage device comprising:
a reactor that contains reaction materials that generate heat by chemical reaction with a reaction medium;
an adsorber that adsorbs the reaction medium with an adsorbent to store the reaction medium; and
a connection pipe that connects the adsorber and the reactor,
wherein the reactor is provided around an outer peripheral surface of a portion at which the heating target is provided in the piping, and includes a plurality of inlets through which the reaction medium is fed.

2. The chemical heat storage device according to claim 1, wherein the reactor surrounds the entire outer peripheral surface of the portion at which the heating target is provided in the piping in a circumferential direction, and wherein the plurality of inlets are arranged so as to be at equal intervals in the circumferential direction of the reactor.

3. The chemical heat storage device according to claim 1 or 2, wherein the plurality of inlets are arranged at a portion other than a lower portion of the reactor in a direction of gravitational force to prevent blockage of each of the inlets by the reaction material.

4. The chemical heat storage device according to any one of claims 1 to 3, wherein the reactor includes divided areas where the reaction medium is movable corresponding to the respective plurality of inlets, and wherein the inlet is provided in the respective divided areas.

5. The chemical heat storage device according to claim 1, wherein the reactor includes an outlet for discharging the reaction medium, and wherein the outlet is arranged in a portion other than a lower portion of the reactor in a direction of gravitational force to prevent blockage of the outlet by the reaction material.
